# EUROPEAN PATENT APPLICATION

(11) **EP 2 042 907 A1**
(43) Date of publication of application: **01.04.2009**
(21) Application number: 07301400.3
(22) Date of filing: 26.09.2007
(51) Int. Cl.: G02B 21/32

(54) **Device and method for optical micromanipulation**

(71) Applicant: Koninklijke Philips Electronics N.V., 5621 BA Eindhoven (NL)
(72) Inventor: Vossen, Dirk, L.J., Paris 75008 (FR); Neijzen, Jacobus, H.M., Paris 75008 (FR); Hendriks, Bernardus, H.W., Paris 75008 (FR); Stallinga, Sjoerd, Paris 75008 (FR)
(74) Representative: van Oudheusden-Perset, Laure E.

(57) **Abstract**

The invention relates to a device for optical micromanipulation 10, including means 26 for generating a light beam 12 and focusing means for focusing the light beam in a sample 16.

According to the invention, the focusing means include an aspherical singlet lens 18 designed to focus the light beam 12 with an angular magnification larger in absolute value than 10.

Advantageously, the device for optical micromanipulation 10 is provided with cooperation means for cooperating with an imaging device for imaging the sample such that the combined device comprising the device for optical micromanipulation 10 and the imaging device is capable of exercising the functions of optical micromanipulation and imaging simultaneously.

The invention further provides a method for optical micromanipulation, comprising the steps of generating a light beam 12 and focusing the light beam 12 in a sample 16.

## Description

### Field of the invention

The present invention relates to a device for optical micromanipulation, wherein the device includes means for generating a light beam and focusing means for focusing the light beam in a sample. More particularly, the invention relates to a device for optical micromanipulation that is attachable to a conventional microscope. The invention further provides a method for optical micromanipulation, comprising the steps of generating a light beam and focusing the light beam in a sample.

Applications include optical trapping of particles or biological cells and microdissection of organic tissue.

### Background of the invention

Microscopic particles, such as molecules, single biological cells, or small samples of organic tissue, can be manipulated by subjecting them to intense electromagnetic radiation, typically a laser beam. The technical field is known as optical micromanipulation. It includes trapping and moving of particles by means of so-called optical tweezers and microscopic cutting of material, especially organic tissue. Further forms of optical micromanipulation could involve, for example, joining or welding together microscopic objects. Although the present invention places an emphasis on optical tweezers and microdissection, the term "optical micromanipulation" is understood throughout this application to refer to any microscopic manipulations on material performed by means of light.

Optical tweezers make use of the forces exerted on a dielectric particle by a light beam. These forces are two-fold: the so-called scattering force pushes particles away from the incident light beam, whereas the so-called gradient force pushes the particle toward the point of highest intensity, provided the particle's refractive index is larger than the refractive index of the medium in which the particle is immersed. In the reverse situation, in which the particle's refractive index is smaller than that of the immersion medium, the gradient force pushes the particle away from the point of highest intensity, so that no stable trapping occurs. Particles may be trapped near the focal point or waist of a focused laser beam, provided the beam's vergence is sufficiently large, so that the gradient force dominates over the scattering force. The thermal fluctuations (the Brownian motion) of the particles can also be overcome. The size of the particles that can be trapped with state-of-the-art optical tweezers ranges from Angströms or the size of atoms to tens of micrometers. If the quality of the focused beam is not high enough, for example due to optical aberrations, the particle is propelled along the optical axis without confinement of the particle near the focus.

Laser microdissection is a method for cutting out micron-to-millimeter-sized tissue samples (e.g. individual cells) from a larger sample by the use of a focused laser beam, the larger sample being inspected under a microscope thus defining the region of interest. Laser microdissection is used to purify tissue samples for further molecular analysis in the fields of genomics, proteomics, and forensics. For example, selecting and isolating certain cells of interest for analyzing the DNA or RNA content of those cells eliminates the interference with the other cells in the tissue sample. Microdissection systems can be acquired from the companies PALM, Leica and Arcturus. The technology of the processes for cutting out samples and removal of these samples from the microscope slide differs for the three companies. The PALM system uses ultraviolet light to ablate tissue along the cutting line and a contactless removal process based on a slightly defocused pulse of light from the same laser to catapult the cut-out tissue towards a collection basket. The Leica system claims the use of gravity: the cut out tissue simply falls in the collection basket. The Arcturus system uses a thermoplastic film that can be made locally adhesive by illumination with an infrared laser beam. In this way the cells of interest stick to the film and can be removed.

In the field of optical micromanipulation, it is generally necessary to converge a laser beam to a diffraction-limited focal region, also referred to as the waist region. In the case of optical trapping, the reason is that the laser must be sufficiently well focused in order to achieve the required intensity gradient. In the case of microdissection, a high quality focus is necessary firstly to achieve a high intensity of the beam and secondly to make the cutting line as sharp as possible.

Existing commercial systems for optical micromanipulation have in common that a single apparatus combines the functionality of imaging with the functionality of manipulating (trapping and moving of particles in the case of optical tweezers, cutting of tissue in the case of microdissection). As a consequence, the whole set-up that is sold is as bulky and expensive as state-of-the-art advanced microscopes, consuming research budgets and valuable laboratory space. There is thus a need for a compact inexpensive micromanipulation system that can be mounted on a microscope that is already available with the customer. Furthermore, in existing commercial systems for optical micromanipulation it can be difficult to operate the micromanipulation means independently from the imaging means. This is particularly the case when the same microscope objective is used for both focusing a manipulation beam and for imaging the object by collecting light that is scattered from the object. In such a system it can be very difficult or impossible to image such parts of the object which lie outside the focal region of the manipulation beam, although it can be desirable to manipulate (e.g. cut) the sample somewhere while monitoring it at the same time at a different position.

While state-of-the art objectives for micromanipulations are composite lens systems, typically microscope objectives, it is observed that an optical recording objective is generally an aspherical singlet lens. Although these lenses are compact and cheap, they are designed to give rise to a diffraction-limited spot at one well-defined distance below the cover layer of a disc. For instance, for a DVD objective having a numerical aperture (NA) of 0.65 and operating at a wavelength of 650 nm, the lens produces a diffraction-limited spot at the information layer at 0.6 mm depth below the surface of a DVD disk. The Blu-ray Disc (BD) is operated with a numerical aperture of 0.85 and a wavelength of 405 nm, and the diffraction-limited spot arises at a depth of 0.1 mm below the disk. These objectives are designed for optical recording; hence they should have a significant field of view (to allow 3-spots push-pull tracking) and remain diffraction-limited over a large temperature range (from 0 to 80 °C). Furthermore, they should be sufficiently achromatic in order to allow simultaneous reading/writing of a disc. Finally, these lenses remain diffraction limited for limited cover layer thickness variations. These properties are not required for optical micromanipulation. In contrast to lenses for optical recording, the objective for optical micromanipulation should produce a high quality spot for a whole range of depths, preferably larger than 0.1 mm, in order to enable the user to manipulate particles in a significant three-dimensional volume. For non-destructive biological applications, the wavelength should be higher than 450 nm, preferably near 800 nm, in order to ensure low absorption of the light by the tissue, thereby preventing heating of the tissue. This requires, however, a different lens design as compared to optical recording.

It is an object of the present invention to provide a device for optical micromanipulation that is simpler and more compact as compared to the prior art, and which can preferably be mounted on an existing microscope. Furthermore, the device should allow for an easy disentanglement of imaging and micromanipulation in three dimensions in the sample.

This object is solved by the features of the independent claim. Further specifications and preferred embodiments are described in the dependent claims.

### Summary of the invention

The invention provides a device for optical micromanipulation, including means for generating a light beam and focusing means for focusing the light beam in a sample, wherein the focusing means include an aspherical singlet lens designed to focus the light beam with an angular magnification larger in absolute value than 10. In this context, the angular magnification is defined as the ratio sin β / sin α, where α is the entrance ray angle (i.e. the angle with the aspherical singlet lens' optical axis) of a light ray of the light beam on the entrance side of the aspherical singlet lens, while β is the ray angle on the exit side of the aspherical singlet lens. When the light beam on the aspherical singlet lens' entrance side is exactly parallel (perfectly collimated), the angle α is 0° for all rays of the light beam. The angular magnification then is infinite. When the light beam on the aspherical singlet lens' entrance side converges in direction to the lens, the entrance ray angle of an arbitrary ray of the light beam α is negative or zero, making the angular magnification negative. It should be noted that for an arbitrary lens the magnification as defined above is a function of the entrance angle α (or, equivalently, of the exit angle β). Accordingly, for many lenses the angular magnification may be considered constant only for small angles α and β. However, the aspherical singlet lens according to the invention is aplanatic or very nearly aplanatic. For such a lens, the angular magnification is very nearly independent of the entry angle α for large values of α as well.

The aspherical singlet lens has at least one aspherical surface (preferably it has two aspherical surfaces) and is configured specifically for micromanipulation, as will be described later on. Such an aspherical singlet lens combines high performance for a limited set of wavelengths and field positions (not more than needed) with low manufacturing cost. Indeed, the invention is based on the insight that, contrary to what the prior art suggests, the microscope objective commonly used for focusing the light beam has an overspecified performance for the intended applications. The present invention simplifies and miniaturizes the focusing optics by providing an aspherical singlet lens as the principal means of focusing the light beam. The principal interest of using an aspherical singlet lens lies in the fact that its two surfaces (or at least one of them) can be aspherically shaped so as to reduce spherical aberration significantly as compared to a spherical singlet lens. The aspherical singlet lens can thus be lighter, smaller and more robust than any composite lens with similar optical characteristics. Thanks to its especially small mass, the aspherical singlet lens allows for a high speed of scanning operation in applications in which the light beam is scanned over a sample. Its small size will also facilitate incorporating it into a compact micromanipulation device that is attachable to an existing imaging device, such as a conventional microscope, especially when the space for the focusing optics is limited, for example, by the external shape of the imaging device. According to the invention, the aspherical singlet lens will usually be the most strongly converging lens of all lenses which might be additionally included in the focusing means. Typically, its optical power is more than 10 times (preferably more than 50 times) as large as the optical power of any other lens possibly included in the focusing means. In practice, the aspherical singlet lens will usually be the micromanipulation device's last optical element on the optical path from the source of the light beam to the sample. However, arranging other simple optical elements (e.g. a transparent plate, a filter, or a weakly converging or diverging lens for correcting aberrations or for otherwise adapting the focusing properties) before and/or after the aspherical singlet lens is possible without departing from the scope of the invention. The aspherical singlet lens can be an immersion lens or a non-immersion lens, which has implications for the preferred ranges of its numerical aperture. For an immersion lens the space between the lens and the cover plate of the sample is filled with a liquid (typically water or an oil). This leads to a larger numerical aperture (typically NA > 1, preferably NA > 1.2) which gives rise to a higher gradient of the beam intensity in the focal region. The upper limit of numerical aperture depends on the refractive index of the immersion medium. For a non-immersion lens the space between the lens and the cover plate is simply vacuum or filled with air. In this case the numerical aperture is necessarily less than 1 (preferably NA < 0.95, more preferably NA < 0.9). The light beam incident on the aspherical singlet lens has a field angle with the optical axis of less than 5 degrees. A small vergence of the light beam on the entrance pupil has the advantage that the aspherical singlet lens can be optimized for the particular case in which the incoming beam is parallel and directed along the optical axis. Note that the beam may be convergent or divergent in direction of the aspherical singlet lens, in the sense that when it is convergent, its cross section decreases toward the aspherical singlet lens, whereas when it is divergent, its cross section increases toward the aspherical singlet lens. Preferably, the vergence of the beam is adjusted using a collimating lens located on the optical path of the light beam before the aspherical singlet lens. In a preferred embodiment of the invention, the means for generating a light beam include a source of coherent light such as a laser. Preferably, the means for generating the coherent light include a semiconductor diode laser.

According to the invention, it is preferred that the aspherical singlet lens has an exit numerical aperture larger than 0.5, aberrations that are less than 10% of the nominal wavelength of the light beam for a range of wavelengths around the nominal wavelength and for a range of field angles with the optical axis, where the wavelength range is less than 100 nm and the field range is less than 2 degrees. As a matter of fact it is this particular combination of parameter ranges that makes it possible to obtain a micromanipulation device actually working with an aspherical singlet lens instead of, as generally proposed, a complex objective lens for focusing the light used for manipulation.

It is further preferred that the entrance pupil of the aspherical singlet lens has a diameter less than 5 mm, and that the mass of the aspherical singlet lens is less than 50 mg. Indeed, such a small size and low weight result in lower cost (less material) and faster positioning of the lens. A lens of these dimensions can be produced on a large scale using techniques known from the fabrication of lenses for optical data recording. Preferably the lens is made of glass or of a polymer and manufactured by injection molding. Alternatively it may consist of a spherical glass body lens and at least one replicated polymer aspherical top layer.

In a preferred embodiment, the device for optical micromanipulation includes displacement means for displacing the aspherical singlet lens along its optical axis and/or in any direction perpendicular to its optical axis. If the device for optical micromanipulation is combined with an imaging device, then these means should preferably operate independently from the focusing means of the imaging device, so that the micromanipulation plane and the imaging plane are not necessarily coupled.

In a preferred embodiment of the invention, the device for optical micromanipulation includes spherical aberration correction means. When the axial position of the aspherical singlet lens is changed, spherical aberration arises in proportion to the deviation of the axial position from the position for which the lens system is optimized and depending on the numerical aperture and on the refractive index of the sample layer and of the immersion liquid (in the immersion case) and of air (in the non-immersion case). For the immersion case the simplest way to avoid this problem is to match the refractive indices of the immersion liquid and the sample layer. One typically uses water immersion for particles suspended in water. For the non-immersion case, this is not possible. The best compromise between quality of the focus and spherical aberration tolerance is then found in the range 0.8 < NA < 0.9. By adding means for correcting spherical aberration, the problem can be overcome. The means for spherical aberration correction can be means for adjusting the vergence of the light beam incident on the aspherical singlet lens (so-called finite conjugate compensation), such as an axially displaceable collimator lens, a fluid focus lens, a liquid crystal device, an adjustable beam expander, or a wavefront modifier. It can also be advantageous that the spherical aberration compensation means are coupled to the aspherical singlet lens so as to minimize spherical aberration automatically for a range of positions of the aspherical singlet lens.

According to a particular embodiment of the invention, the device for optical micromanipulation includes detection means for capturing light scattered by objects in a region that includes the waist of the light beam. The detection means may include a photo-detector for detecting light scattered from an object in that region. Hereby the detection means may be designed such that the scattered light is collected by the aspherical singlet lens that is also used for focusing the light beam. This back-scattered light may, for example, be captured by a photo-detector comprising multiple segments, typically four, for measuring the three-dimensional position of a trapped particle from the difference signals between the photo-detector segments. In order to separate the light beam from the scattered light, beam splitters may be advantageously employed. Advantageously, the detection means may take the form of imaging means for displaying an image of the objects to be detected. In this case there are thus at least two lenses, the aspherical singlet lens for micromanipulation, and a lens for imaging, which typically forms part of a microscope objective. The aspherical singlet lens and the imaging lens may be situated on opposing sides of the sample layer, and the aspherical singlet lens may also be used for illuminating the sample.

In a preferred embodiment of the invention, the device for optical micromanipulation is provided with cooperation means for cooperating with an imaging device for imaging the sample, such that the combined device consisting of the device for optical micromanipulation and the imaging device can exercise the functions of optical micromanipulation and imaging simultaneously. In particular, the device for optical micromanipulation may have means for being removably attached to the imaging device, thus forming an add-on to a conventional microscope. The add-on preferably includes a housing/box enclosing at least the aspherical singlet lens and the means for generating the light beam. The means for being removably attached to the imaging device may be such that the aspherical lens and an objective of the imaging device are situated on opposite sides of the sample. Furthermore, the device for optical micromanipulation may be provided with means for illuminating the sample. These means may be designed such that they allow to direct light from a condenser of the imaging device via the aspherical singlet lens onto the sample. Alternatively, the means for illuminating the sample may include an illuminating light source and allow to direct light from the illuminating light source onto the sample via the aspherical lens. An advantage of the add-on is that the additional expense for obtaining a micromanipulation device together with a conventional microscope may be lowered again, provided the buyer already owns this microscope. A second advantage is that the functionality of the microscope is flexibly upgraded, i.e. the micromanipulation device can be added and removed at will, depending on the user's temporary preference for functionality. Indeed, it has been realized that most of the users already own such a microscope. Consequently, they only need to buy the add-on and simply plug it to the existing conventional microscope. As mentioned above, an add-on box in which an aspherical singlet lens according to the invention is used is more compact than an add-on box comprising of a conventional microscope objective, and will thus fit more easily into the available space. The means for cooperating with the imaging device preferably include attaching means for attaching the micromanipulation device to the imaging device and means for outputting the light beam in a predetermined direction. The attachment means may be screws and holes for receiving screws, but other embodiments are possible, depending on the type of the conventional microscope.

In a preferred embodiment of the invention, the light beam leaving the aspherical singlet lens forms an optical trap. Preferably, the light beam then has a wavelength larger than 450 nm, and, more preferably, near 800 nm. The means for generating the light source may include a continuous wave laser. The device may also include a feedback system for measuring the quality of the trap, for example, by measuring the positions of particles in the trap.

In another preferred embodiment, the intensity of the light beam at the waist is sufficient for cutting organic material. Thereby a microdissection device is realized. The wavelength of the light beam should then preferably be less than 400 nm. It should also be noted that the means for generating the light beam may include a pulsed laser. The microdissection device may include means for generating a second light beam, for the removal of tissue, wherein the second light beam has a wavelength larger than 700 nm, and means for directing the second light beam onto the sample via the aspherical lens. Indeed, it may be advantageous to have a microdissection system incorporating two lasers with a different wavelength. Ablation of material along the cutting line is most effective when the absorption is relatively high. This can be achieved with ultraviolet light (wavelength less than about 400 nm, typically 350 nm). The most suitable type of light for the removal process is infrared light (wavelength larger than about 700 nm, typically 790 nm or 1064 nm) in order to prevent damage to the biological object that would arise from the use of light with a shorter wavelength. A secondary problem that arises in this optical configuration is spherical aberration related to the difference in wavelength of the two lasers. This spherochromatism occurs because a simple singlet lens is used instead of a more complicated (but bulky and expensive) microscope objective or composite lens. This secondary problem may be solved in a number of ways. According to a first solution the two lasers are positioned along the optical axis in such a way that the vergence of the beam incident on the singlet focusing lens is different for both beams. The amount of divergence or convergence may be adapted to compensate for the given amount of spherochromatism. According to a second solution means to compensate for spherical aberration are added to the light path. Preferably, these means change the vergence of the beam incident on the singlet focusing lens. This may be achieved with an actuator that can displace the collimator lens along the optical axis or with a fluid focus lens. According to a third solution a wavefront modifier can be added to the shared beam path. The advantage of the second and third solutions is that spherical aberration arising from other causes, e.g. a variation in the thickness of the microscope slide, can be compensated as well.

The present invention further relates to a method using a device as mentioned above. The method may further comprise the step of trapping particles or cells by means of the light beam. Additionally or alternatively, the method may comprise the step of cutting organic material by means of the light beam. The method may further comprise the successive steps of
- moving the aspherical singlet lens along its optical axis to a position X,
- moving another lens along the optical axis to a position Y so as to minimize spherical aberration in the focal region of the light beam, and
- memorizing the positions (X, Y) in a lookup table.

Thereby a lookup table for facilitating the correction of spherical aberration can be generated. The lookup table can take any physical form. In particular it may be stored in digital form. In combination with means for displacing the other lens along the optical axis of the aspherical singlet lens, the lookup table may be used to minimize spherical aberration automatically when the aspherical singlet lens is moved along its optical axis. To this end, the method for optical micromanipulation may comprise the successive steps of
- moving the aspherical singlet lens along its optical axis to a position X,
- reading, as a function of X, a position Y from a lookup table that indicates explicitly or implicitly for at least one position X of the aspherical singlet lens the corresponding position Y of another lens for which spherical aberration in the focal region of the light beam was found to be minimal, and
- moving the lens to the position Y.

Advantageously, these steps are controlled by means of a control unit having integrated circuitry, e.g. by a personal computer. Note that "reading" as employed here includes electronic data acquisition. The lookup table may indicate a position Y as a function of a position X implicitly in the sense that Y may be stored as a function of X, the function involving parameters but not necessarily explicit values of Y. The step of reading Y as a function of X from the lookup table may also comprise the step of interpolating Y using a discrete set of position values (X, Y) memorized in the lookup table. According to another aspect of the invention, the method for optical micromanipulation may additionally comprise the step of iteratively minimizing the spatial distribution of at least one particle trapped in the light beam by repeatedly measuring the spatial distribution of the at least one particle and, after each measurement, repositioning a lens on the optical axis of the aspherical singlet lens so as to reduce the spatial distribution of the at least one particle. Hence, by measuring the spatial distribution of an already trapped particle, it is possible to improve the quality of the trap, thereby confining the trapped particle even further.

### Brief description of the drawings

Figure 1 is a schematic sectional view of a prior art optical tweezers system.
Figures 2a, 2b, and 2c provide schematic views of an aspherical singlet lens according to the invention and illustrate the effect of changing the vergence of the incident beam.
Figure 2d illustrates the entrance ray angle α and the exit ray angle β for a light ray of a light beam focused by the aspherical singlet lens.
Figure 3 provides a schematic view of a device for optical trapping according to the invention.
Figure 4 illustrates the optical trapping device for optical trapping of Figure 3 which additionally includes a photo-detector for measuring the position of a trapped particle.
Figure 5 is a flow diagram illustrating a method for correcting spherical aberration using a lookup table.
Figure 6 is a flow diagram representing an iterative method for correcting spherical aberration.
Figure 7 schematically shows a device for optical trapping according to the invention, wherein the device forms an add-on to a conventional microscope, the microscope being using to observe the trapped particles or cells.
Figure 8 illustrates a prior-art optical microdissection device.
Figure 9 is a schematic view of an optical microdissection device according to the invention.
Figure 10 is a schematic view of a preferred embodiment of an optical microdissection device according to the invention, in which the device includes a condenser for illuminating the sample via the aspherical singlet lens.
Figure 11 is a schematic view of another preferred embodiment of an optical microdissection device according to the invention, wherein the device includes an illuminating light source and an additional lens for illuminating the sample via the aspherical singlet lens.
Figure 12 is a schematic view of yet another preferred embodiment of an optical microdissection device according to the invention, wherein the device includes two lasers operating at different wavelengths.

### Description of preferred embodiments

In the drawings, similar or analogous features appearing in different figures are assigned the same reference numerals and are not necessarily described more than once.

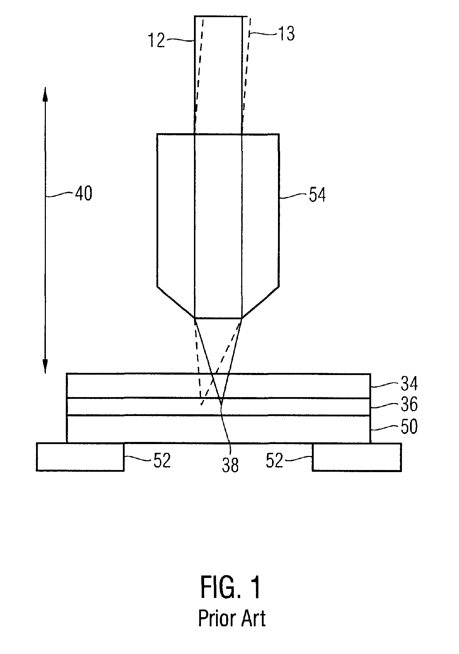

Figure 1 schematically shows a prior art tweezers system. An assembly consisting of a microscope slide 50, a fluid sample layer 36 containing to-be-trapped particles or cells and a cover plate 34 is placed on a stage 52 for positioning in three dimensions x, y, and z. A microscope objective lens system 54 is used to focus a beam of light 12 into a focus 38 in the sample layer 36. Lateral positioning can be achieved by beam steering techniques. For example, adjusting the angle of incidence of the beam (the dotted lines 13) on the lens system 54, the field of the lens system 54 is used and the focus is displaced in the lateral direction. For axial positioning of the focus with respect to the sample (the axial direction is indicated by the double arrow 40), either the stage 52 or the lens system 54 must be displaced in the axial direction.

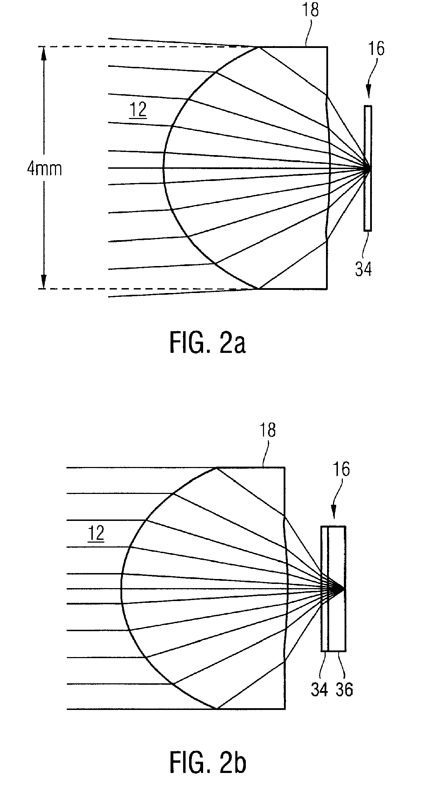

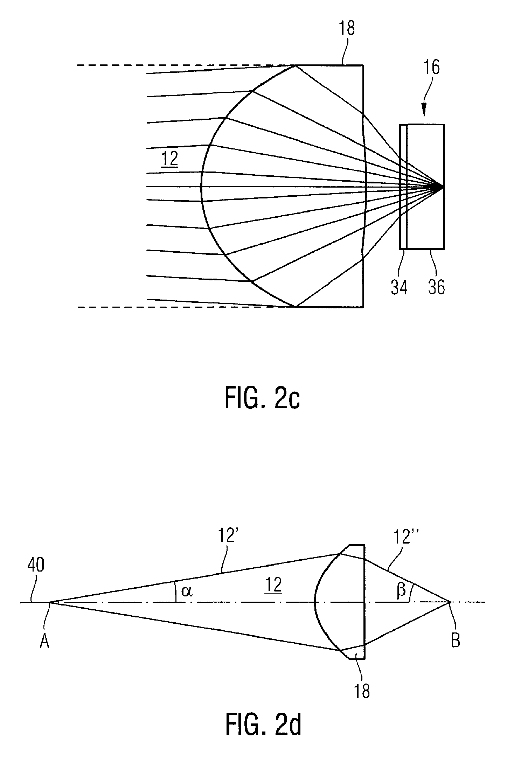

Turning now to Figure 2 (a, b, c), there is shown an objective according to a preferred embodiment of the invention, for three different configurations. The objective lens is a bi-aspherical singlet lens 18 made of SK2 glass. It is designed for a wavelength of 785 nm. It has an entrance pupil diameter of 4 mm and a vacuum numerical aperture of 0.85. When a light beam 12 enters the bi-aspherical singlet lens 18 parallel the optical axis, the lens focuses a beam through a glass cover 34 of 0.1 mm made of BK7 glass to form a diffraction-limited spot 38 in water at 0.25 mm distance from the cover glass 34. To focus at a different position in water 36, the vergence of the beam 12 is changed, in combination with displacing the bi-aspherical singlet lens with respect to the cover glass 34. This objective, consisting of the single lens 18, is capable of producing a diffraction-limited spot for water thickness values between 0 and 0.6 mm.

Figure 2d illustrates the angular magnification of the light beam 12 passing through the aspherical singlet lens 18. Seen from the entrance pupil of the aspherical singlet lens, the light beam appears to originate from a point source situated at a point A. The point A is assumed here to lie on the optical axis 40, but it may as well lie off the optical axis. The point A may coincide with a physical source of the light beam 12, but usually it will only be a virtual point, as there will usually be other optical elements between the aspherical singlet lens 18 and the point A. The beam 12 is focused by the aspherical singlet lens 18 in a point B. An exemplary light ray 12' of the beam 12 has an entrance ray angle α with the optical axis 40. The light ray 12' is transformed by the aspherical singlet lens 18 into a light ray 12" having an exit ray angle β with the optical axis 40. The lens 18 being nearly aplanatic, the angular magnification sin β / sin α is nearly independent of α, for a fixed position of the point A with respect to the aspherical singlet lens 18. According to the invention, the angular magnification is larger than 10. If the point A were to be moved (e.g. along the optical axis 40), the corresponding point B where the beam 12 is focused would move as well and the angular magnification would change, too. Note that the angles α and β in Figure 2d are not to scale. In reality, β is far larger than the corresponding angle α, for all rays of the light beam 12 incident on the aspherical singlet lens 18.

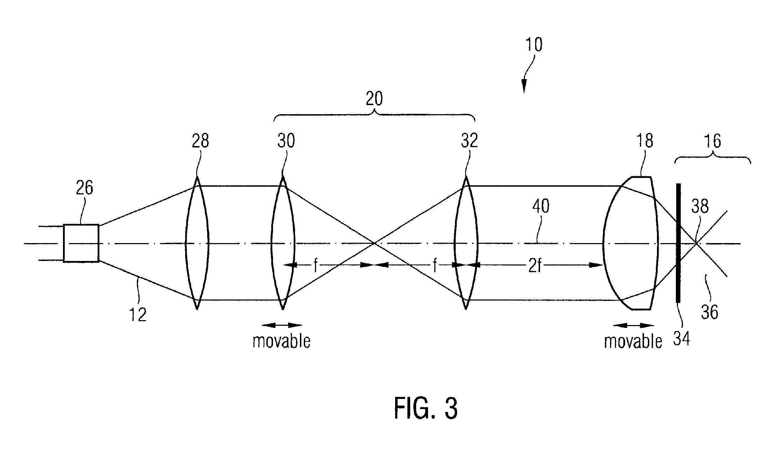

Figure 3 illustrates a compact optical tweezers system 10 using a singlet bi-aspherical lens 18. A laser 26 emits a light beam 12 of wavelength 785 nm that is collimated using a collimator lens 28. A set of telescope lenses 30 and 32 forming a beam expander 20 is used to couple the beam 12 into the singlet bi-aspherical lens 18 which then focuses the beam 12 into the sample 16. Note that the Figure is not to scale and that in reality the focal length of the singlet bi-aspherical lens 18 is much shorter than the focal length of any of the other lenses (28, 30, and 34) shown in the Figure. The sample 16 consists of a glass bottom plate 34 through which the laser is focused and, adjacent the glass bottom plate 34, an aqueous environment 36. To change the depth at which the tweezers operate, i.e. the axial position of the focus 38 with respect to the glass bottom plate 34, both the bi-aspherical singlet lens 18 and the first telescope lens 30 may be moved along the optical axis 40. Over the whole depth range over which the tweezers 10 are operated, the vergence of the laser beam 12 incident on the aspherical lens 18 can be adapted by moving the first telescope lens 30 such that the focus 38 becomes diffraction-limited. The displacement of the telescope lens 30 needed to introduce the correct amount of vergence for a certain operating depth can be calibrated. The calibration data can be stored in a lookup table (LUT) relating the depth of the tweezers 10 to the position of the bi-aspherical singlet lens 18 and the position of the first telescope lens 30 on the optical axis 40.

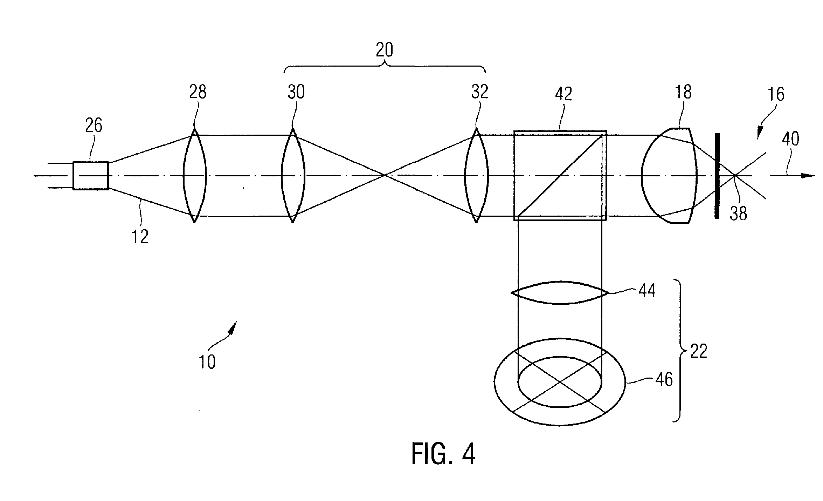

Referring now to Figure 4, there is shown an example of a feedback system 22 that can be used to determine the position of a particle in the optical trap with high accuracy and at high frequencies. In this embodiment the bi-aspherical singlet lens 18 may be moved along its optical axis 40 to change the depth of the trapping plane in the sample 16, while the feedback system 22 measures the quality of the optical. The position of the first telescope lens 30 is then adjusted to optimize the quality of the optical trap, i.e., to minimize the trap's spatial dimension while maximizing the depth of its potential well. More precisely, the laser light scattered from the particle is collected by the bi-aspherical singlet lens 18 and, using a beam splitting cube 42 and a lens 44, imaged onto a quadrant photo-detector 46. The differential signal from the quadrants of the photo-detector 46 yields the position of a trapped particle. From this data a simple criterion for the quality of the optical trap, such as the statistical spread of a trapped particle's position, can be deduced and converted into another signal, which is then used to adapt the position of the first telescope lens 30.

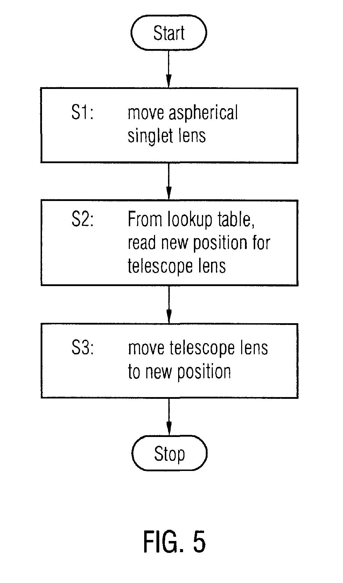

Figure 5 shows a flow diagram of a first method for correctly positioning the first telescope lens 30, in order to minimize spherical aberration and to obtain a diffraction-limited focus 38 of light after changing the position of the bi-aspherical singlet lens 18. In a first step S1 the bi-aspherical singlet lens 18 is moved to a new position X. In the new position, the opening angle of the light beam on the entrance pupil of the bi-aspherical singlet lens 18 differs from the original opening angle. As a consequence, the spherical aberration of the singlet bi-aspherical lens is not fully compensated anymore. In the next step S2, an optimal new position Y for the first telescope lens 30 is read from the lookup table. Finally, in step S3 the first telescope lens 30 is moved to the new position Y read from the lookup table, whereby spherical aberration is again minimized.

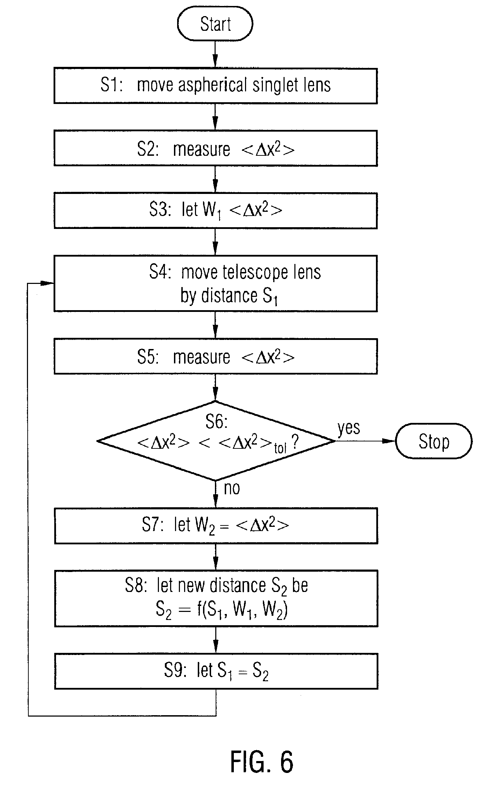

Figure 6 shows a flow diagram of an alternative iterative method for correctly positioning the first telescope lens 30 (position coordinate Y) in order to minimize spherical aberration. In a first step S 1 the bi-aspherical singlet lens 18 (position coordinate X) is moved to a new position X. Then, in step S2, the feedback system of Figure 4 is used to measure the quadratic deviation <Δx²> defined as the square of the particle's axial distance Δx from its mean position, averaged over the time of the measurement, thus giving an indication as to the width of the optical trap. In the case of several simultaneously trapped particles, each particle gives a contribution to <Δx²>. Next, in step S3, the measured quadratic deviation <Δx²> is referred to as w₁ in order to distinguish it from a quadratic deviation to be measured later. Next, in step S4, the first telescope lens 30 is moved by a (small) distance s₁, whereby the spherical aberration of the laser beam 12 in the focal region 38 is altered. The resulting quadratic deviation <Δx²> for the particle's position is measured again (Step S5) and compared to a predefined maximum allowable value or tolerance <Δx²>ₜₒₗ (Step S6). When it is found that the measured quadratic deviation <Δx²> is less than the predefined tolerance value <Δx²>ₜₒₗ, the process is stopped. If, however, it is found that <Δx²> exceeds <Δx²>ₜₒₗ, then the process moves on to step S7, in which the measured value for <Δx²> is now called w₂, to distinguish it from the previously measured value w₁. In the following step S8, a new distance s₂ by which the first telescope lens 30 is to be displaced is determined as a function of both the first displacement distance s₂ and the measured quadratic deviations w₁ and w₂. Various mathematical functions are possible, including such functions in which the displacement distance s₂ is increased or decreased with respect to the previous displacement distance s₂, depending on the difference between w₂ and w₂. Finally, in step S9, the displacement distances s₂ is renamed s₁, and the process returns to S4. Provided the mentioned function in step S8 is adequately chosen, the position Y of the first telescope lens 30 will converge until in step S6 it is finally found to be sufficiently converged, whereby the process stops.

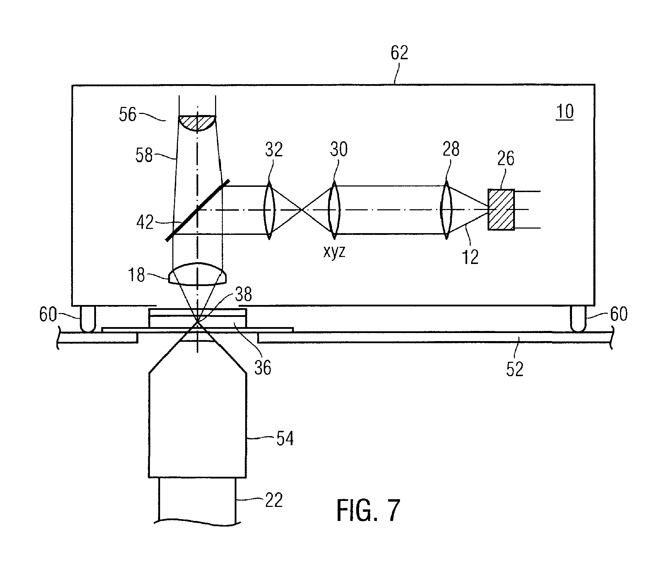

Turning now to Figure 7, there is shown a device 10 for optical micromanipulation according to the invention, wherein the device 10 is mounted on the stage 52 of a conventional microscope 54. The microscope 54 is set up inversely with its objective pointing upward. The micromanipulation device 10 comprises optical tweezers analogous to those described with reference to Figure 3, and, additionally, an illuminating light source 56 emitting light 58 for illuminating the sample layer 36 containing the particles to be trapped. The optical tweezers comprise a continuous wave laser 26 for generating a light beam 12, a collimator lens 28, a beam expander formed of two telescope lenses 30 and 32, a beam splitter 42, and an aspherical singlet lens 18 for focusing the light beam 12 into a sample layer 36. The light 18 from the illuminating light source 56 passes through the beam splitter 42 to be focused by the same aspherical singlet lens 18 that is also used to focus the light beam 12. The tweezers optics 26, 28, 30, 32, 42, 18 and the illuminating light source are contained in a housing 62 having pillars 60 resting on the microscope stage 52. The housing 62 has an opening 64 for enabling the light beam 12 and the illuminating light 18 to exit the housing/box and to reach the sample layer 36. The tweezers and illumination optics inside the housing 62 are rigidly attached to the housing, thus making it possibly to remove the entire micromanipulation device 10 easily and to put it back into its operating position on the microscope stage without need for readjusting the optics inside the housing, except possibly for minor adjustments of the aspherical singlet lens and one of the telescope lenses 30 and 32. In order to calibrate and/or to refocus the light beam, the housing may be provided with means on its outside which enable the user to control at least some of the optical elements it contains. The microscope 54 is further connected to imaging means 22, such as a CCD camera or other digital device, for imaging particles or biological cells trapped in the focal region 36 of the optical tweezers 10. The imaging means can optionally include a filter device for filtering out the wavelength of the light beam 12.

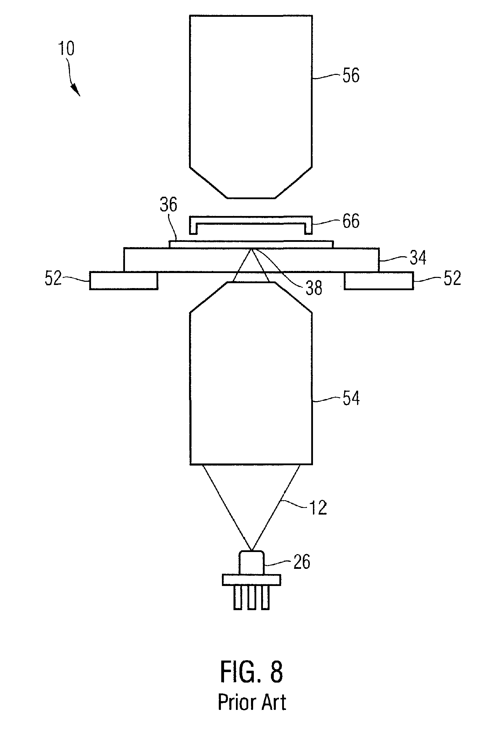

Figure 8 is a schematic view of a prior art laser microdissection device 10. A layer 36 containing biological material of interest is attached to a microscope slide 34, and to-be collected micro-tissue is collected at a collection basket 66. The layer 36 is viewed through a microscope objective 54 (eyepiece and/or electronic camera are not drawn) and illuminated through condenser optics 56 (light source is not drawn). An ultraviolet laser 26 emits a beam 12 that is focused by the microscope objective 54 onto the layer 36. The laser 26 is used for both the cutting process and for the removal process (see US patent 5998129). A translation table 52 is used to position the layer 36 with respect to the focal spot 38 of the beam 12.

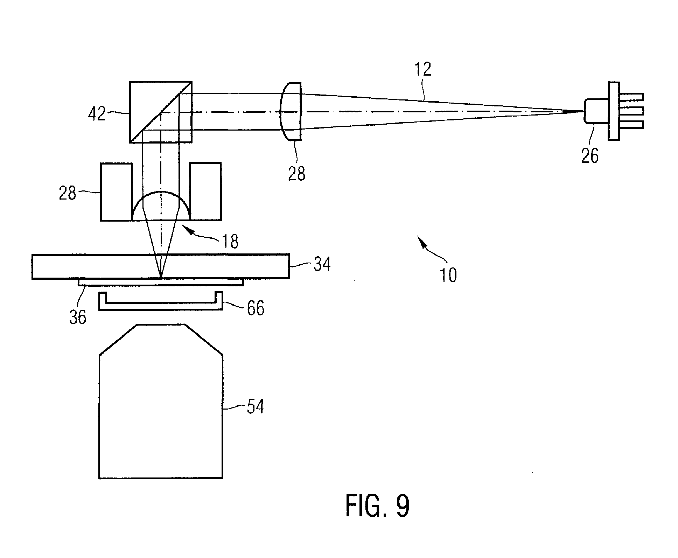

Figure 9 illustrates a laser microdissection device 10 according to the invention. The laser 26 for microdissection emits a beam 12 that is focused by a collimator lens 28, is reflected at a beam splitter 42, and focused by a separate, aspherical singlet lens 18 onto a layer 36. The lens 18 is placed on an actuator 68 for positioning the lens in three directions (and thus positioning the focal spot in three dimensions). The layer 36 is viewed through a microscope objective 54 of a conventional microscope (eyepiece and/or electronic camera are not drawn). The thickness of the substrate of the collection basket 66 must be adapted to the optical design of the microscope objective 54. For example, when the microscope objective 54 is optimized for imaging through a microscope slide or cover slip of a certain thickness, the substrate of the collection basket 66 must have the same thickness. This assumes that the materials in question have the same refractive index. When the substrate of the collection basket 66 has a different refractive index, the substrate's thickness must be adapted to minimize the amount of spherical aberration in the imaging step of the microscope 54. A problem that arises in the shown configuration is, however, that the singlet aspherical lens 18 prevents the microscope's condenser 56 (see Figure 8) from an optimal illumination of the sample.

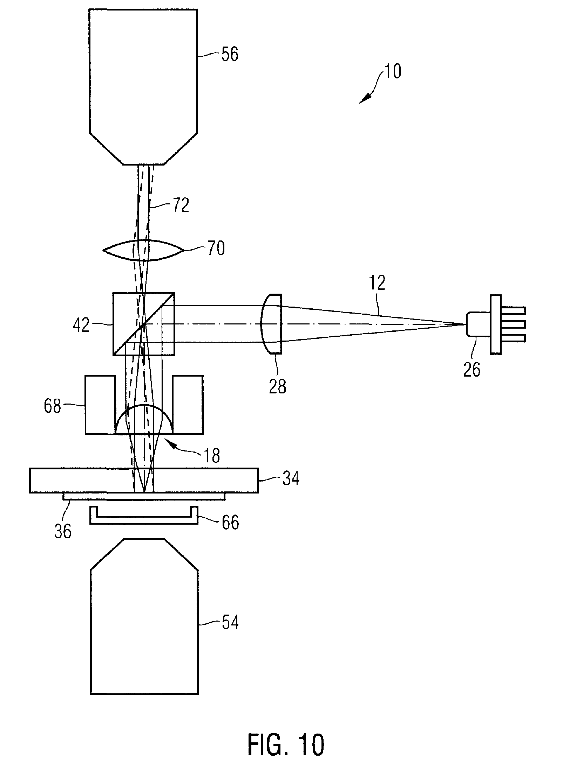

Figure 10 represents another laser microdissection device 10 according to the invention. The problem of illuminating the sample which was encountered in the configuration of Figure 9 is solved by integrating an illumination system into the microdissection device 10. Now an extra lens system 70 focuses the collimated light from the condenser 56 onto the back focal plane of the aspherical singlet lens 18 to provide the optimal illumination 72 for imaging of the sample with the microscope objective 54. Note that rays corresponding to beam 12 are dotted and rays corresponding to illumination beam 72 are solid (rays emanating from on-axis source point) and dashed (rays emanating from off-axis source point). The optical system comprising the microscope condenser 56, the lens system 70, and the aspherical singlet lens 18 provide the correct illumination for imaging with the microscope objective 54. Again, the aspherical singlet lens 18 is placed on an actuator 68 for positioning the lens in three directions (and thus positioning the focal spot in three dimensions). When the aspherical singlet lens 18 is moved in the z-direction (along the optical axis), the lens system 70 may be used to compensate for this movement to keep the illumination of the sample optimal. To this end, the lens system 70 may be provided with a zoom function for changing its (combined) focal length. Alternatively, the optical system comprising the condenser 56, the lens system 70 and the aspherical singlet lens 18 can be designed to be telecentric, which guarantees insensitivity of magnification with respect to defocus.

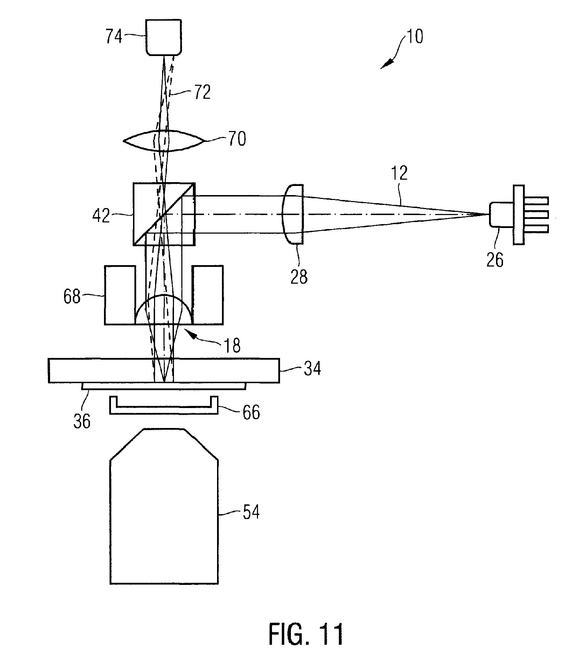

Figure 11 shows a laser microdissection device 10 according to the invention with an integrated illumination system for the microscope 54. Now an additional light source 74, preferably a light-emitting diode (LED), is added to the system that is used to illuminate the sample layer 36 through the extra lens system 70 and the aspherical singlet lens 18.

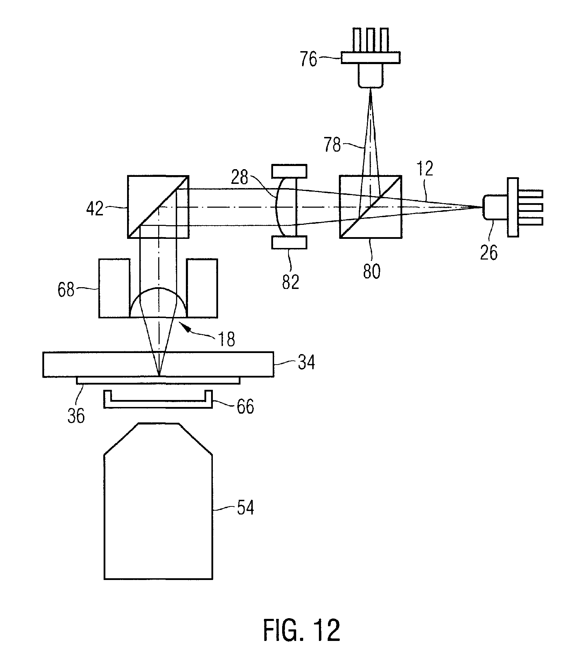

Figure 12 sketches a laser microdissection device according to the invention incorporating a second laser 76 emitting a beam 78 that is combined with the beam path of beam 12 at a beam splitter 80. The collimator lens 28 may be mounted on an actuator 82 for displacements along the optical axis to allow for compensating spherical aberration for both beams 12 and 78, or for either beam 12 or beam 78. Note also that the two beams 12 and 78 may be focused into the same plane or into different planes.

## Claims

1. A device for optical micromanipulation (10), including
- means (26) for generating a light beam (12) and
- focusing means for focusing the light beam in a sample (16),
**characterized in that** the focusing means include an aspherical singlet lens (18) designed to focus the light beam (12) with an angular magnification larger in absolute value than 10.

2. The device for optical micromanipulation (10) as claimed in claim 1, wherein the aspherical singlet lens (18) has an exit numerical aperture larger than 0.5, aberrations that are less than 10% of the nominal wavelength of the light beam for a range of wavelengths around the nominal wavelength and for a range of field angles with the optical axis, where the wavelength range is less than 100 nm and the field angle range is less than 2 degrees.

3. The device for optical micromanipulation (10) as claimed in one of the preceding claims, wherein
- the entrance pupil of the aspherical singlet lens (18) has a diameter less than 5 mm, and
- the mass of the aspherical singlet lens (18) is less than 50 mg.

4. The device for optical micromanipulation (10) as claimed in one of the preceding claims, wherein the device (10) includes displacement means for displacing the aspherical singlet lens (18) along its optical axis and/or in any direction perpendicular to its optical axis.

5. The device for optical micromanipulation (10) as claimed in one of the preceding claims, wherein the device includes spherical aberration correction means (20).

6. The device for optical micromanipulation (10) as claimed in one of the preceding claims, wherein the device includes detection means (22) for capturing light scattered by objects in a region that includes the waist of the light beam.

7. The device for optical micromanipulation (10) as claimed in one of the preceding claims, wherein the device is provided with cooperation means for cooperating with an imaging device for imaging the sample, such that the combined device comprising the device for optical micromanipulation (10) and the imaging device is capable of exercising the functions of optical micromanipulation and imaging simultaneously.

8. The device for optical micromanipulation (10) as claimed in one of the preceding claims, wherein the light beam (12) leaving the aspherical singlet lens (18) forms an optical trap.

9. The device for optical micromanipulation (10) as claimed in one of the preceding claims 1 to 7, wherein the intensity of the light beam (12) at the waist is sufficient for cutting organic tissue.

10. A method for optical micromanipulation, comprising the steps of:
- generating a light beam (12) and
- focusing the light beam in a sample (16),
**characterized in that** the step of focusing the light beam in the sample is carried out by focusing means that include an aspherical singlet lens (18) having an optical power larger than 90% of the optical power of said focusing means.

11. The method for optical micromanipulation (10) as claimed in claim 10, additionally comprising the step of trapping particles or cells by means of the light beam (12).

12. The method for optical micromanipulation (10) as claimed in claim 10, additionally comprising the step of cutting organic material by means of the light beam (12).
